# EUROPÄISCHE PATENTSCHRIFT

(11) **EP 3 152 992 B1**
(45) Veröffentlichungstag und Bekanntmachung des Hinweises auf die Patenterteilung: **11.04.2018**
(21) Anmeldenummer: 15188646.2
(22) Anmeldetag: 06.10.2015
(51) Int. Cl.: A01C 7/04

(54) **EINZELKORNSÄVORRICHTUNG**
INDIVIDUAL SEED SOWING DEVICE
DISPOSITIF DE SEMOIR MONOGRAINE

(43) Veröffentlichungstag der Anmeldung: 12.04.2017
(73) Patentinhaber: Kverneland AS, 4355 Kvernaland (NO)
(72) Erfinder: Winkelmann, Michael, 59494 Soest (DE); Grafe, Andreas, 59514 Welver (DE)
(74) Vertreter: Schneider, Sascha

(56) Entgegenhaltungen:
- EP-B1- 1 310 147
- FR-A1- 2 591 061
- US-A1- 2014 182 494

## Beschreibung

Die vorliegende Erfindung betrifft eine Einzelkornsävorrichtung (auch Einzelkornsämaschine genannt) zur vereinzelten Abgabe von Saatkörnern. Eine solche Vorrichtung ist beispielsweise aus der Druckschrift EP 1 310 147 B1 bekannt.

Bei einer Vorrichtung gemäß dem Stand der Technik besteht allerdings das Problem, dass die Position des Unterbrecherkörpers bei der Montage der Vorrichtung exakt eingestellt werden muss, wodurch sich ein erhöhter Aufwand bei der Montage ergibt. Außerdem ist im Stand der Technik ein Nachstellen des Unterbrecherkörpers erforderlich.

Es ist daher die Aufgabe der vorliegenden Erfindung, eine Einzelkornsävorrichtung zu Verfügung zu stellen, die die Nachteile des Stands der Technik nicht aufweist und insbesondere eine vereinfachte Montage ermöglicht und ein Nachstellen entbehrlich macht. Außerdem soll die Funktionssicherheit der Vorrichtung verbessert werden.

Diese Aufgabe wird mit der Einzelkornsävorrichtung gemäß dem Patentanspruch 1 gelöst.

Erfindungsgemäß wird die Aufgabe durch eine Einzelkornsävorrichtung gelöst, aufweisend:
- eine Trommel, wobei die Trommel um eine Drehachse rotierbar ist,
- ein in der Trommel ausgebildeter Hohlraum, wobei eine Stirnseite des Hohlraums von einer Säscheibe begrenzt wird, in der auf einer gedachten Kreisbahn mehrere Sälöcher in Abstand zueinander angeordnet sind,
- ein im Hohlraum angeordneter Körper, wobei der Körper um eine mit Abstand und parallel zur Drehachse angeordnete weitere Drehachse drehbar ist, wobei der Körper mit einem Teil seiner Oberfläche so gegen die Säscheibe anliegt, dass der Körper bei rotierender Säscheibe ein jeweils vorbei geführtes Säloch innenseitig temporär abdichtet, wobei der Körper auf einer den Hohlraum umgreifenden äußeren Mantelfläche abrollbar ist,
- eine Druckfeder, wobei die Druckfeder den Körper gegen die Mantelfläche drückt, wobei die Druckfeder den Körper in radialer Richtung in Bezug auf die Drehachse der Trommel gegen die Mantelfläche drückt.
Grundgedanke der Erfindung ist es insbesondere, den Körper gegen die Mantelfläche zu drücken, so dass der Körper stets optimal positioniert ist und durch die optimale Kraftübertragung ein verbessertes Abrollen des Körpers auf der Mantelfläche erreichbar ist. Dadurch kann die Montage erheblich erleichtert werden, weil die Position des Körpers nicht exakt vorgegeben sein muss, sondern die Position des Körpers stellt sich automatisch aufgrund der Druckfeder ein.

Im Folgenden beziehen sich die Richtungsangaben "radial" und "axial" auf die Drehchase der Trommel. Die Angaben "außen" und "innen" beziehen sich auf die Radialrichtung. Die Angaben "vorne" und "hinten" beziehen sich auf die Axialrichtung.

Außerdem kann bei kleineren Fremdkörpern wie Bruchkorn usw., die zwischen die Mantelfläche und den Körper fallen, der Körper gegen die Druckfeder ausweichen.

Der Hohlraum kann an eine Unterdruckquelle anschließbar sein. Alternativ kann der Hohlraum als Abluftkanal für den Überdruck einer Überdruckquelle ausgebildet sein.

Die Druckfeder drückt den Körper zumindest mittelbar gegen die Mantelfläche, sodass sich zwischen der Druckfeder und dem Körper mindestens ein weiteres Element befinden kann. Erfindungsgemäss drückt die innen angeordnete Druckfeder den Körper parallel zur Radialrichtung, also senkrecht zur Axialrichtung, auf die äußere Mantelfläche, so dass vorteilhaft eine optimale Kraftübertragung zwischen Körper und Mantelfläche stattfindet und das Abrollen des Körpers auf der Mantelfläche verbessert werden kann. In einer anderen bevorzugten Ausführungsform ist die Druckfeder auf einer Druckplatte angeordnet, wodurch die Druckfeder abgestützt werden und gegen seitliches Ausknicken geschützt werden kann. Die Druckfeder kann insbesondere auf die Druckplatte aufgesetzt sein, wobei die Druckplatte zumindest teilweise innerhalb der Druckfeder angeordnet ist.

In einer anderen bevorzugten Ausführungsform weist die Vorrichtung einen Arm auf, an dem zumindest der Körper und die Druckfeder angeordnet sind. Insbesondere ist an einem äußeren Ende des Arms der Körper angeordnet und der Arm ist an seinem inneren Ende an einer die Trommel aufnehmenden Welle festgelegt. Die Druckfeder kann zwischen dem Körper und der Welle angeordnet sein.

In einer bevorzugten Ausführungsform ist der Arm als Blattfeder ausgebildet. Dabei ist die Blattfeder insbesondere in Richtung der Säscheibe gebogen, so dass der Körper, insbesondere in Axialrichtung, auf die Säscheibe gedrückt wird. Dadurch kann eine besonders gute Abdeckung der Sälöcher erreicht werden. Insbesondere ist die Blattfeder entlang einer Biegelinie beziehungsweise Biegekante gebogen, welche senkrecht zur Radialrichtung verläuft.

In einer bevorzugten Ausführungsform weist der Arm eine Kulisse auf, in der die Druckfeder angeordnet ist. Dieses dient insbesondere der bauraumsparenden Bauweise der Vorrichtung.

Vorteilhaft ist auch die Druckplatte innerhalb der Kulisse des Arms angeordnet, wobei sich der Aufbau der Vorrichtung wesentlich vereinfachen lässt.

In einer anderen bevorzugten Ausführungsform weist der Arm eine, insbesondere in Radialrichtung wirkende, Bewegungsbegrenzung für den Körper auf. Dadurch kann vorteilhaft ein unerwünschtes Verschieben des Körpers verhindert werden. Insbesondere kann der Arm einen Anschlag zur Begrenzung der Bewegung beziehungsweise Position des Körpers aufweisen. Der Anschlag kann am äußeren Ende des Arms angeordnet sein und die radiale Bewegung des Körpers nach außen begrenzen. Insbesondere ist der Anschlag als radial äußere Begrenzung der Kulisse ausgebildet.

Die Kulisse im Arm kann in Radialrichtung symmetrisch zur Radialrichtung ausgebildet sein, wodurch die Herstellung erheblich vereinfacht werden kann.

Die Vorrichtung kann weiterhin einen, insbesondere in Radialrichtung, beweglichen Schiebeschlitten zur Übertragung der Druckkraft der Druckfeder aufweisen. Dadurch kann die Druckfeder radial gesehen innen angeordnet werden, wodurch Bauraum eingespart werden kann. Der Schiebeschlitten ist insbesondere zwischen der Druckfeder und dem Körper angeordnet. Er kann innerhalb der Kulisse beweglich angeordnet sein und insbesondere über einen oder mehrere, insbesondere beidseitig angeordnete, Klipse in der Kulisse beweglich befestigt sein.

Die Vorrichtung kann insbesondere eine weitere Bewegungsbegrenzung zur Begrenzung der Bewegung des Schiebeschlittens aufweisen. Sie verhindert, dass der Schiebeschlitten zu weit nach außen gedrückt wird. Sie kann als mindestens ein Vorsprung, insbesondere in der Kulisse, ausgebildet sein. Bevorzugt sind zwei Vorsprünge als weitere Bewegungsbegrenzung angeordnet.

In einer bevorzugten Ausführungsform weist der Schiebeschlitten an seinem in Radialrichtung vorderen Ende eine Zunge auf, die schmaler ausgebildet ist, als der hintere Bereich des Schiebeschlittens. Dadurch kann die Druckkraft der Druckfeder noch weiter nach außen übertragen werden. Die schmalere Zunge ist dementsprechend in einem schmaleren vorderen Bereich der Kulisse angeordnet, welcher sich insbesondere vor der weiteren Bewegungsbegrenzung zur Begrenzung der Bewegung des Schiebeschlittens befindet.

In einer anderen bevorzugten Ausführungsform weist die Vorrichtung einen Zapfen auf, wobei der Zapfen zur Aufnahme des Körpers beziehungsweise eines Lagers, insbesondere Kugellagers, des Körpers ausgebildet ist. Durch den Zapfen kann der Körper besser befestigt werden. Der Zapfen kann innerhalb der Kulisse, insbesondere im radial äußersten Bereich der Kulisse, angeordnet sein.

Der Schiebeschlitten kann in einer bevorzugten Ausführungsform mit seinem vorderen Bereich, insbesondere seiner Zunge, auf den Zapfen drücken, wodurch die Druckkraft der Druckfeder effizient über den Schiebeschlitten auf den Zapfen und somit auf den Körper übertragen wird.

In einer bevorzugten Ausführungsform ist der Körper in Bezug auf eine senkrecht zur Radialrichtung und senkrecht zur Axialrichtung, insbesondere parallel zur Säscheibenebene, verlaufende Pendelachse drehbar angeordnet. Dadurch kann sich der Körper besser an die Säscheibe anlegen. Zur Drehung um die Pendelachse kann der Zapfen auf jeder Seite einen Pendelvorsprung aufweisen, der auf dem Arm bzw. Rand der Kulisse aufliegt, so dass der Zapfen um die Pendelachse pendeln beziehungsweise rotieren kann.

In einer bevorzugten Ausführungsform ist der mindestens eine Pendelvorsprung nach unten hin, also mit dem Bereich, der auf dem Arm aufliegt, halbrund ausgebildet, wodurch ein vereinfachtes Kippen ermöglicht wird.

Bevorzugt ist der Drehwinkel um die Pendelachse begrenzt, um die Betriebssicherheit zu verbessern. Der maximale Drehwinkel des Körpers um die Pendelachse beträgt ±50°, bevorzugt ±40°, weiter bevorzugt ±30°, noch weiter bevorzugt ±20°, am bevorzugtesten ±10°, am allerbevorzugtesten ±6°. In einer bevorzugten Ausführungsform weist der Zapfen einen Anschlag zur Begrenzung des Winkels auf, um den sich der Zapfen drehen kann. Der Anschlag kann insbesondere an einem dem Körper abgewandten Ende des Zapfens angeordnet sein.

In einer bevorzugten Ausführungsform weist der Zapfen in seinem mittleren Bereich oberhalb des Arms einen, insbesondere planen, Sockel auf, der zur Begrenzung der Aufpresstiefe des Körpers beziehungsweise des Lagers des Körpers auf den Zapfen dient.

Im oberen Bereich des mindestens einen Pendelvorsprungs ist dieser bevorzugt plan ausgebildet und schließt insbesondere bündig mit dem Sockel zur Begrenzung der Aufpresstiefe ab. Insbesondere ist auf jeder Seite des Zapfens ein einziger Pendelvorsprung angeordnet.

Im Übrigen entspricht die Vorrichtung einer bekannten Einzelkornsävorrichtung, wie sie beispielsweise im eingangs genannten Stand der Technik beschrieben ist.

Weitere Merkmale der Erfindung ergeben sich aus den Merkmalen der Unteransprüche sowie den sonstigen Anmeldungsunterlagen. Die Erfindung wird nachstehend anhand eines Ausführungsbeispiels näher beschrieben. Dabei zeigen - jeweils in schematisierter Darstellung -
- Figur 1:: eine perspektivische Seitenansicht (teilweise im Aufriss) einer erfindungsgemäßen Vorrichtung,
- Figur 2:: einen Querschnitt durch die Vorrichtung aus Figur 1,
- Figur 3a:: in einer perspektivischen Vorderansicht einen Arm mit einem Körper der beispielhaften erfindungsgemäßen Vorrichtung aus Figur 1 und Figur 2,
- Figur 3b:: eine Rückansicht des Arms mit dem Körper aus Figur 3a,
- Figur 3c:: eine Seitenansicht des Arms mit dem Körper aus der Figur 3a beziehungsweise 3b,
- Figur 4a:: den Arm aus Figur 3a ohne Körper,
- Figur 4b:: die Druckplatte, den Schiebeschlitten und den Zapfen aus der Figur 4a,
- Figur 5:: den Arm aus Figur 4a in einer vergrößerten Ansicht,
- Figur 6:: den Arm aus der Figur 5 in einer Seitenansicht,
- Figur 7:: die erfindungsgemäße Vorrichtung mit dem Körper und dem Arm unter Weglassung der Säscheibe und
- Figur 8:: den Arm ohne Druckfeder, Druckplatte, Schiebeschlitten und Zapfen.

In den Figuren sind gleiche oder gleichwirkende Bauteile mit gleichen Bezugszeichen dargestellt.

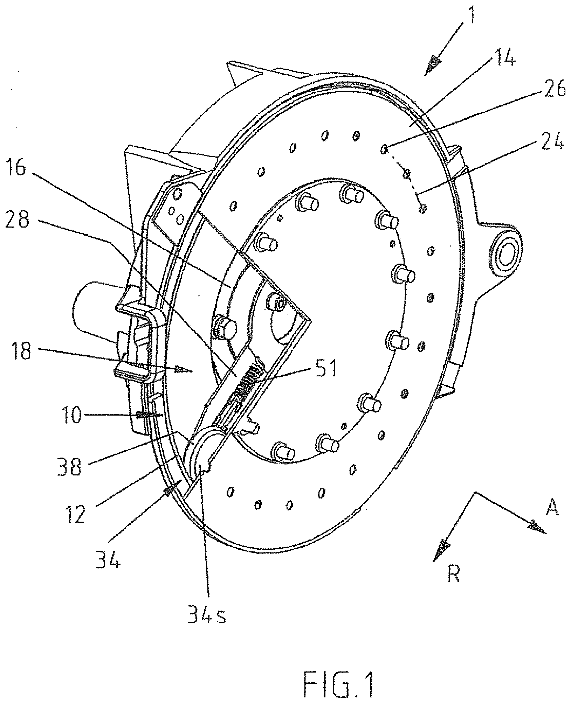

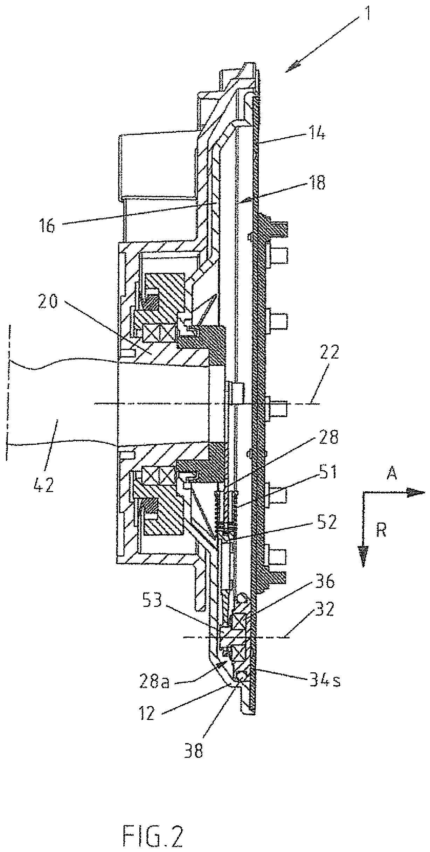

Die in den Figuren 1 und 2 dargestellte Vorrichtung 1 (Einzelkornsävorrichtung 1) umfasst im Wesentlichen einen trommelartigen Körper 10 (Trommel 10) mit einer ringförmigen Umfangswand 12 (äußere Mantelfläche 12), einer stirnseitigen Säscheibe 14 und einer der Säscheibe 14 gegenüberliegenden Rückwand 16, die gemeinsam einen Hohlraum 18 umschließen.

Die Trommel 10 ist drehbar auf einer Welle 20 angeordnet, deren Drehachse (erste Drehachse) das Bezugszeichen 22 trägt (Figur 2). Die Axialrichtung ist mit dem Pfeil A bezeichnet. Die Radialrichtung ist mit dem Pfeil R bezeichnet.

Die Führung und Lagerung der Trommel 10 auf der Welle 20 wird nicht näher beschrieben, weil sie an sich bekannt und für den Erfindungsgedanken ohne Bedeutung sind.

Wie insbesondere Figur 1 zu entnehmen ist, weist die Säscheibe 14 auf einer gedachten Kreislinie 24 (im Folgenden auch Kreisbahn 24 genannt) eine Reihe von Sälöchern 26 (auch Sauglöcher genannt) auf, die untereinander jeweils einen gleichen Abstand aufweisen.

Von der Welle 20 verläuft ein Federarm 28 (Blattfeder 28) im Wesentlichen senkrecht zur ersten Drehachse 22. Der Federarm 28 ist stationär im Bereich der Welle 20 fixiert und trägt an seinem gegenüberliegenden äußeren Ende 28e (benachbart der Umfangswand 12) einen parallel zur ersten Drehachse 22 verlaufenden Zapfen 53 mit einer entsprechend parallel zur ersten Drehachse 22 verlaufenden zweiten Drehachse 32, auf der ein scheibenförmiger Körper 34 über ein Drehlager 36 aufsitzt.

Eine vordere Stirnfläche (Oberfläche) 34s des Körpers 34 liegt gegen die Säscheibe 14 innenseitig an, und zwar auf Grund des Anpressdrucks des Federarms 28.

Wie sich aus den Figuren 1 und 2 ergibt, liegt der Körper 34 dabei so gegen die Innenseite der Säscheibe 14 an, dass er ein korrespondierendes Säloch 26 und angrenzende Bereiche der Innenseite der Säscheibe abdeckt.

Im dargestellten Ausführungsbeispiel verläuft die zweite Drehachse 32 etwas versetzt nach innen im Verhältnis zum Mittelpunkt der Sälöcher 26 beziehungsweise der gedachten Kreisbahn 24.

Auf seiner Umfangsfläche weist der Körper 34 einen elastischen Ring 38 auf, der innenseitig gegen die Umfangswand 12 anliegt, so dass der Körper 34 bei rotierender Trommel 10 sich um den Zapfen 53 dreht, und zwar mit einer sehr viel größeren Umdrehungsgeschwindigkeit als die Säscheibe 14.

Dabei überstreicht der Körper 34 einen ringförmigen Streifen auf der Innenseite der Säscheibe 14, dessen Breite den Durchmesser des Körpers 34 im Kontaktbereich zur Säscheibe 14 entspricht.

Die Funktion der Vorrichtung ist wie folgt:
Im Hohlraum 18 wird ein Unterdruck erzeugt (über eine an die Hohlwelle 20 angeflanschte Unterdruckleitung 42). Entsprechend liegt an den Sälöchern 26 ein Unterdruck an, der es ermöglicht, im Bereich jedes Sälochs 26 außenseitig (in Figur 2 rechts) jeweils ein Saatkorn festzuhalten, welches über eine nicht dargestellte Saatgutzuführung auf bekannte Art und Weise antransportiert wird.

Alternativ ist grundsätzlich anstelle von Unterdruck ein Betrieb mit Überdruck möglich.

Dieser Unterdruck ist lediglich im Bereich des einen Sälochs 26 unterbrochen, welches in der jeweiligen Position der Säscheibe 14 vom Körper innenseitig abgedeckt wird.

Dadurch, dass jeweils nur ein Säloch 26 zu einem Zeitpunkt abgedeckt ist, ergibt sich bei konstanter Rotationsgeschwindigkeit der Säscheibe 14 ein konstantes Abwurfintervall für die einzelnen Saatkörner beziehungsweise ein konstanter Abstand zwischen den in einer Furche abgelegten Saatkörnern bei konstanter Geschwindigkeit der Zugmaschine.

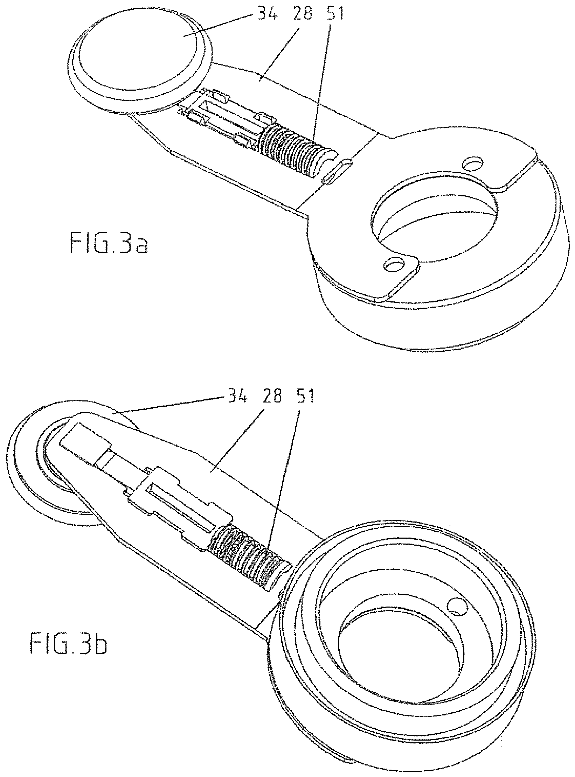

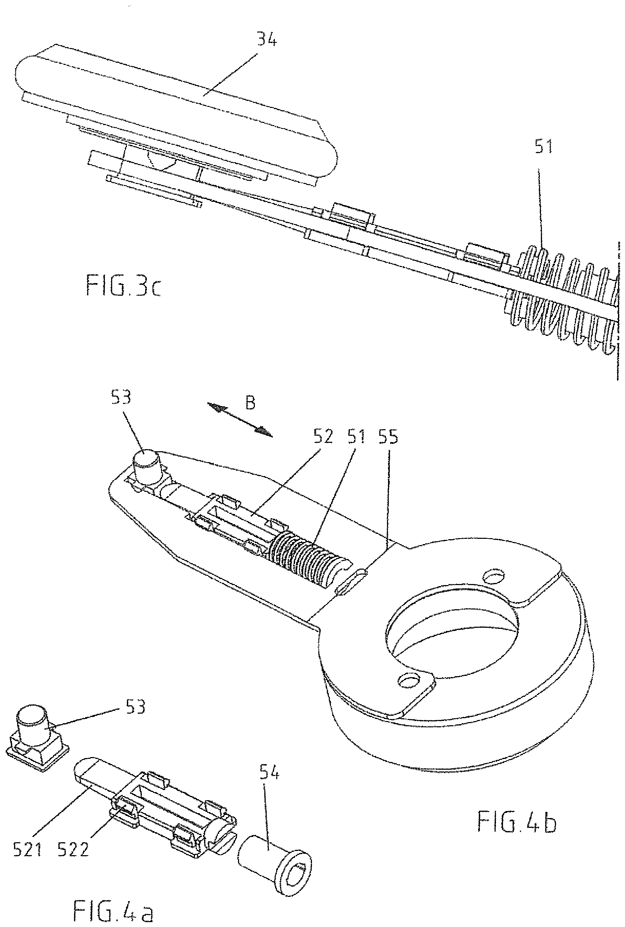

Wie sich in Zusammenschau mit den Figuren 3a, 3b, 3c, 4a, 4b, 5 ergibt, weist die Vorrichtung weiterhin eine Druckfeder 51, eine Druckplatte 54, einen Schiebeschlitten 52 mit einer Zunge 521, und einen Zapfen 53 auf. Am Schiebeschlitten 52 sind seitlich jeweils zwei Clipse 522 angeordnet.

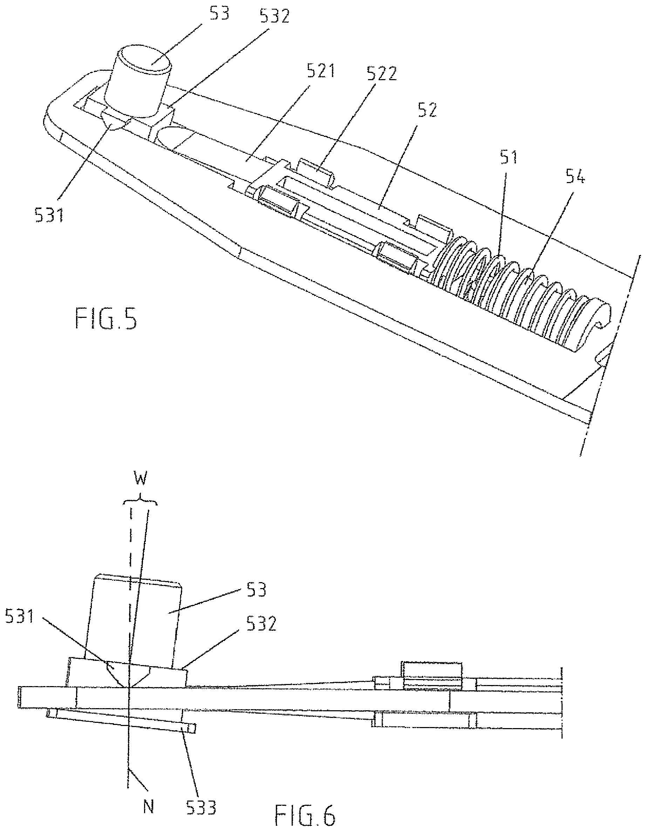

Wie insbesondere aus der Figur 6 hervorgeht, weist der Zapfen 53 auf jeder Seite je einen Pendelvorsprung 531 auf. Weiterhin weist der Zapfen 53 an seinem unteren Ende einen Anschlag 533 auf. Desweiteren weist der Zapfen 53 in seinem mittleren Bereich einen plan ausgebildeten Sockel 532 auf. Die Pendelachsenvorsprünge 531 sind nach oben hin plan ausgebildet und schließen bündig mit dem Sockel 532 ab. Nach unten hin sind die Pendelachsenvorsprünge 531 rund ausgebildet.

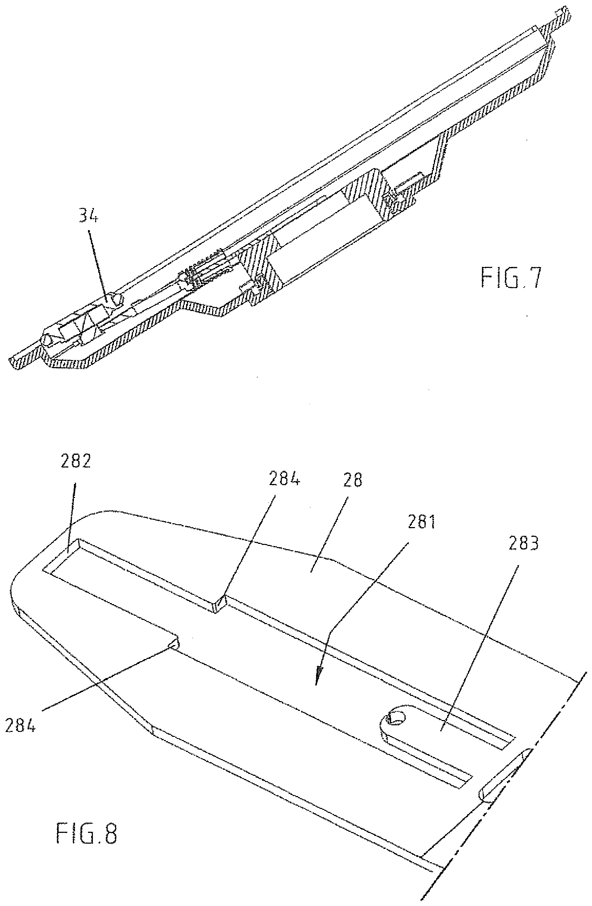

Der Federarm 28 (Blattfeder 28) weist, wie insbesondere in der Figur 8 zu sehen ist, eine Kulisse 281 auf. Die Kulisse 281 wird in radial nach außen gehender Richtung durch einen äußeren Anschlag 282 (Tiefenbegrenzung), der als Anschlag für den Zapfen 53 ausgebildet ist, begrenzt. Innerhalb der Kulisse 281 weist der Arm 28 eine Aufnahme 283 für die Druckplatte 54 auf. Mittig zwischen der Aufnahme 283 und der äußeren Begrenzung 282 sind zwei Vorsprünge 284 (auch Anschläge genannt) angeordnet, die ins Innere der Kulisse 281 ragen. Die Vorsprünge 284 dienen der Begrenzung der radialen Bewegung des Schiebeschlittens 52. Die Kulisse 281 ist demnach in ihrem radial gesehen äußeren Bereich durch die Vorsprünge 284 schmaler ausgebildet als der innere Bereich der Kulisse 281. Im äußeren Bereich der Kulisse 281 ist der Zapfen 53 und die Zunge 521 des Schiebeschlittens 52 angeordnet. Die Aufnahme 283 nimmt in radialer Richtung die Druckplatte 54 auf. Die Druckplatte 54 liegt mit einem inneren Anschlag im inneren Bereich der Aufnahme 283 am inneren Ende der Kulisse 281 auf. Die Druckfeder 51 ist auf die Druckplatte 54 aufgesetzt, wobei die Druckfeder 51 in radialer Richtung länger ist als die Druckplatte 54 und die Aufnahme 283.

Der Schiebeschlitten 52 weist in seinem inneren Ende einen schmalen Zapfen auf, mit dem der Schiebeschlitten 52 in die Druckfeder 51 eingeführt werden kann. Die Druckfeder 51 liegt darauf hin mit ihrer vorderseitigen Stirnfläche am inneren Ende des Schiebeschlittens 52 auf. Der Schiebeschlitten 52 ist in radialer Richtung beweglich innerhalb der Kulisse 281 geführt.

Dazu weist der Schiebeschlitten auf jeder Seite zwei Clipse 522 auf, die auf den Seitenwänden der Kulisse 281 aufliegen, so dass der Schiebeschlitten 52 in der Kulisse gleitend in Radialrichtung beweglich geführt ist.

In Radialrichtung nach außen ist die Bewegung des Schlittens 52 durch die Vorsprünge 284 begrenzt. Dadurch wird erreicht, dass ein unbeabsichtigtes Verschieben des Verschiebeschlittens und somit auch des Körpers 34 verhindert werden kann.

Die am äußeren Ende des Schlittens 52 angeordnete Zunge 521 erstreckt sich im äußeren schmaleren Bereich der Kulisse 281. Mit dem äußeren Ende der Zunge 521 liegt der Schiebeschlitten 52 am beweglichen Zapfen 53 an. Der Schiebeschlitten schließt hierbei im Wesentlichen bündig mit der Oberfläche des Arms 28 ab.

Die Zunge 521 liegt am Sockel 532 des Zapfens 53 an, und überträgt somit die Druckkraft der Druckfeder 51, die auf den Schiebeschlitten 52 übertragen wird, auf den Zapfen 53 und somit auch auf den Körper 34. Insbesondere zeigt die Figur 6, dass der Zapfen 53 durch die runden Pendelvorsprünge 531 um eine Pendelachse senkrecht zur Radialrichtung schwenkbar auf dem Arm 28 gelagert ist. Der im unteren Bereich angeordnete Anschlag 533 begrenzt diese Pendel- beziehungsweise Schwenkbewegung auf den Winkelbereich W in Bezug auf die Normale N der Blattfeder 28. Dadurch wird verhindert, dass der Zapfen 53 beziehungsweise der Körper 34 zu weit verschwenken kann.

Die Blattfeder 28 ist um eine Biegekante 55 in Richtung der Säscheibe 14 gebogen, wobei die Biegekante senkrecht zur Radialrichtung R verläuft. Dadurch kann der Körper 34 mit Druck gegen die Säscheibe 14 gedrückt werden. Die Figur 7 zeigt die Vorrichtung im vormontierten beziehungsweise halbmontierten Zustand ohne Säscheibe 14. In diesem Zustand ragt der Körper 34 durch die Biegung der Blattfeder 28 über die gedachte Säscheibenebene hinaus.

Die Funktionsweise ist nunmehr wie folgt: Die Druckfeder 51 drückt den Schiebeschlitten 52 und den Zapfen 53 radial nach außen in Richtung der Mantelfläche 12, so dass der Körper 34 auf die Mantelfläche 12 gedrückt wird und sicher rotiert. Dadurch passt sich der Körper 34 selbstständig an die Säscheibe und die Mantelfläche an. Es muss keine Einstellung bei der Montage vorgenommen werden. Die Funktionssicherheit wird erhöht und ein Nachstellen entfällt. Der Körper 34 ist in ständiger Rotation, wodurch sich die plane Oberfläche des Körpers 34 selbstständig reinigt, sodass keine Undichtigkeiten durch Schmutz oder Bruchkorn entstehen.

Bei kleineren Fremdkörpern wie Bruchkorn usw., die zwischen Trommel und Körper 34 fallen, weicht der Körper beziehungsweise der Zapfen radial nach innen aus. Insbesondere kann die Blattfeder aus Edelstahl gefertigt sein.

Die mögliche Bewegung des Zapfens 53 beziehungsweise des Schiebeschlittens 52 ist in der Figur 4a mit dem Doppelpfeil B dargestellt. Demnach können sich der Schiebeschlitten und der Zapfen 53 in Radialrichtung nach außen oder entgegen der Radialrichtung nach innen bewegen.

### Bezugszeichenliste

- 1: Einzelkornsävorrichtung
- 10: Trommel
- 12: Mantelfläche, Umfangswand
- 14: Säscheibe
- 16: Rückwand
- 18: Hohlraum
- 20: Welle
- 22: Drehachse
- 24: Kreisbahn
- 26: Säloch
- 28: Arm
- 28e: äußeres Ende des Arms
- 32: zweite Drehachse
- 34: Körper
- 34s: Oberfläche des Körpers
- 36: Lagerung
- 38: Ring
- 42: Unterdruckleitung
- 51: Druckfeder
- 52: Schiebeschlitten
- 521: Zunge
- 522: Clips
- 53: Zapfen
- 531: Pendelvorsprung
- 532: Sockel
- 533: Anschlag
- 54: Druckplatte
- 55: Biegekante
- 281: Kulisse
- 282: Anschlag
- 283: Aufnahme für Druckplatte
- 284: Anschlag
- A: Axialrichtung
- B: Bewegungsrichtung
- W: Winkelbereich
- N: Normale
- R: Radialrichtung

## Patentansprüche

1. Vorrichtung zur vereinzelten Abgabe von Saatkörnern, mit folgenden Merkmalen:
1.1 einer Trommel (10),
1.2 die Trommel (10) ist um eine Drehachse (22) rotierbar,
1.3 einem in der Trommel (10) ausgebildeten Hohlraum (18),
1.4 eine Stirnseite des Hohlraums (18) wird von einer Säscheibe (14) begrenzt, in der auf einer gedachten Kreisbahn (24) mehrere Sälöcher (26) im Abstand zueinander angeordnet sind,
1.5 im Hohlraum (18) ist ein Körper (34) angeordnet, der
1.6 um eine mit Abstand und parallel zur Drehachse (22) angeordnete Achse (32) drehbar ist,
1.7 mit einem Teil (34s) seiner Oberfläche so gegen die Säscheibe (14) anliegt, dass er bei rotierender Säscheibe (14) ein jeweils vorbei geführtes Säloch (26) innenseitig temporär abdichtet,
1.8 wobei der Körper (34) auf einer den Hohlraum (18) umgreifenden äußeren Mantelfläche (12) abrollbar ist, **gekennzeichnet durch**
1.9 eine Druckfeder (51), wobei die Druckfeder den Körper (34) gegen die Mantelfläche (12) drückt, wobei die Druckfeder (51) den Körper (34) in radialer Richtung in Bezug auf die Drehachse (22) der Trommel (10) gegen die Mantelfläche (12) drückt.

2. Vorrichtung nach Anspruch 1, wobei die Druckfeder (51) auf einer Druckplatte (54) angeordnet ist.

3. Vorrichtung nach Anspruch 1, wobei die Druckfeder (51) in einer Kulisse (281) eines Arms (28) angeordnet ist, an dessen äußerem Ende (28e) der Körper (34) angeordnet ist und deren inneres Ende an einer Trommel (10) aufnehmenden Welle (20) festgelegt ist.

4. Vorrichtung nach Anspruch 2 und 3, wobei die Druckplatte (54) in der Kulisse (281) des Arms (28) angeordnet ist.

5. Vorrichtung nach Anspruch 3, wobei der Arm (28) einen äußeren Anschlag zur Begrenzung der Bewegung des Körpers (34) aufweist.

6. Vorrichtung nach Anspruch 3, wobei der Arm (28) als Blattfeder ausgebildet ist, die in Richtung der Säscheibe (14) gebogen ist.

7. Vorrichtung nach Anspruch 3, wobei ein Schiebeschlitten (52) in der Kulisse (281) angeordnet ist, auf den die Druckfeder (51) drückt.

8. Vorrichtung nach Anspruch 7, wobei der Schiebeschlitten (52) Clipse (522) zur beweglichen Anordnung in der Kulisse aufweist.

9. Vorrichtung nach Anspruch 7, wobei der Schiebeschlitten (52) an seinem äußeren Ende eine Zunge (521) aufweist, wobei die Zunge (521) schmaler als der innere Teil des Schiebeschlittens (52) ist.

10. Vorrichtung nach Anspruch 3, wobei im äußeren Bereich der Kulisse (281) ein Zapfen (53) zur Aufnahme des Körpers angeordnet ist.

11. Vorrichtung nach Anspruch 7, wobei der Schiebeschlitten (52) auf den Zapfen (523) drückt.

12. Vorrichtung nach Anspruch 11, wobei der Zapfen (523) um eine Pendelachse senkrecht zur Radialrichtung (R) rotierbar ist.

13. Vorrichtung nach Anspruch 11, wobei der Zapfen (523) einen Anschlag (533) zur Begrenzung der Pendelbewegung aufweist.

## Claims

1. Device for separate dispensing of seed grains, having the following features:
1.1 a drum (10),
1.2 the drum (10) is rotatable about an axis of rotation (22),
1.3 a cavity (18) formed in the drum (10),
1.4 an end side of the cavity (18) is delimited by a sowing disk (14) in which a plurality of sowing holes (26) are arranged at a distance from one another on an imaginary circular path (24),
1.5 a body (34) is arranged in the cavity (18) which
1.6 can be rotated about an axis (32) arranged at a distance and parallel to the axis of rotation (22),
1.7 with one part (34s) of the surface thereof resting against the sowing disk (14) so that when the sowing disk (14) rotates, said part temporarily seals on the inside a sowing hole (26) guided past in each case,
1.8 wherein the body (34) can be rolled on an outer casing surface (12) surrounding the cavity (18), **characterized by**
1.9 a compression spring (51), wherein the compression spring presses the body (34) against the casing surface (12), wherein the compression spring (51) presses the body (34) against the casing surface (12) in the radial direction in relation to the axis of rotation.

2. The device according to claim 1, wherein the compression spring (51) is disposed on a pressure plate (54).

3. The device according to claim 1, wherein the compression spring (51) is disposed in a coulisse (281) of an arm (28), on the outer end (28e) whereof the body (34) is arranged and the inner end thereof is fixed on a shaft (20) receiving a drum (10).

4. The device according to claim 2 or 3, wherein the pressure plate (54) is arranged in the coulisse (281) of the arm (28).

5. The device according to claim 3, wherein the arm (28) has an outer stop for delimiting the movement of the body (34).

6. The device according to claim 3, wherein the arm (28) is configured as a leaf spring which is bent in the direction of the sowing disk (14).

7. The device according to claim 3, wherein a sliding carriage (52) is disposed on the coulisse (281), on which the compression spring (51) presses.

8. The device according to claim 7, wherein the sliding carriage (52) has clips (522) for movable arrangement in the coulisse (281).

9. The device according to claim 7, wherein the sliding carriage (52) has a tongue (521) at its outer end, wherein the tongue (521) is narrower than the inner part of the sliding carriage (52).

10. The device according to claim 3, wherein a pin (53) for receiving the body is disposed in the outer region of the coulisse (281).

11. The device according to claim 7, wherein the sliding carriage (52) presses onto the pin (523).

12. The device according to claim 11, wherein the pin (523) is rotatable about a pendulum axis perpendicular to the radial direction (R).

13. The device according to claim 11, wherein the pin (523) has a stop (533) for delimiting the pendulum motion.

## Revendications

1. Dispositif de distribution individualisée de semences, comportant les caractéristiques suivantes :
1.1 un tambour (10),
1.2 le tambour (10) pouvant tourner autour d'un axe de rotation (22),
1.3 une cavité (18) conformée dans le tambour (10),
1.4 une face frontale de la cavité (18) est limitée par un disque de semage (14) dans lequel plusieurs trous de semage (26) sont pratiqués à distance les uns des autres sur une piste circulaire imaginaire (24),
1.5 un corps (34) est disposé dans la cavité (18), lequel corps
1.6 peut tourner autour d'un axe (32) disposé à distance de et parallèlement à l'axe de rotation (22),
1.7 repose par une partie (34s) de sa surface contre le disque de semage (14) de manière à colmater temporairement un intérieur un trou de semage (26) passant respectivement devant lui lorsque le disque de semage (14) est en rotation,
1.8 le corps (34) pouvant rouler sur une surface d'enveloppe extérieure (12) entourant la cavité (18), **caractérisé par**
1.9 un ressort de compression (51), le ressort de compression comprimant le corps (34) contre la surface d'enveloppe (12), le ressort de compression (51) comprimant le corps (34) dans le sens radial par rapport à l'axe de rotation (22) du tambour (10) contre la surface d'enveloppe (12).

2. Dispositif selon la revendication 1, dans lequel le ressort de compression (51) est disposé sur une plaque de compression (54).

3. Dispositif selon la revendication 1, dans lequel le ressort de compression (51) est disposé dans une coulisse (281) d'un bras (28) à l'extrémité extérieure (28e) duquel le corps (34) est disposé et dont l'extrémité intérieure est fixée sur un arbre (20) recevant le tambour (10).

4. Dispositif selon la revendication 2 et 3, dans lequel la plaque de compression (54) est disposée dans la coulisse (281) du bras (28).

5. Dispositif selon la revendication 3, dans lequel le bras (28) présente une butée extérieure pour limiter le mouvement du corps (34).

6. Dispositif selon la revendication 3, dans lequel le bras (28) est réalisé sous forme d'un ressort à lame qui est courbée en direction du disque de semage (14).

7. Dispositif selon la revendication 3, dans lequel un patin coulissant (52) sur lequel appuie le ressort de compression (51) est disposé dans la coulisse (281).

8. Dispositif selon la revendication 7, dans lequel le patin coulissant (52) présente des clips (522) destinés à être disposés de manière mobile dans la coulisse.

9. Dispositif selon la revendication 7, dans lequel le patin coulissant (52) présente une languette (521) à son extrémité extérieure, la languette (521) étant plus étroite que la partie intérieure du patin coulissant (52).

10. Dispositif selon la revendication 3, dans lequel un tourillon (53) destiné à recevoir le corps et disposé dans la partie extérieure de la coulisse (281).

11. Dispositif selon la revendication 7, dans lequel le patin coulissant (52) appuie sur le tourillon (523).

12. Dispositif selon la revendication 11, dans lequel le tourillon (523) peut tourner autour d'un axe pendulaire perpendiculairement au sens radial (R).

13. Dispositif selon la revendication 11, dans lequel le tourillon (523) présente une butée (533) pour limiter le mouvement pendulaire.
